(19) Europäisches Patentamt
European Patent Office
Office européen des brevets

(11) Numéro de publication: **0 421 973 A1**

# (12) DEMANDE DE BREVET EUROPEEN

(21) Numéro de dépôt: **90870163.4**

(22) Date de dépôt: **04.10.90**

(51) Int. Cl.5: **C08L 29/04**, C08L 59/00, C08K 5/13, C08K 5/20

(30) Priorité: **04.10.89 BE 8901062**

(43) Date de publication de la demande: **10.04.91 Bulletin 91/15**

(84) Etats contractants désignés: **AT BE CH DE DK ES FR GB GR IT LI LU NL SE**

(71) Demandeur: **SOLVAY & Cie (Société Anonyme)**
**Rue du Prince Albert, 33**
**B-1050 Bruxelles(BE)**

(72) Inventeur: **T'Kint, Jean**
**Rue des Trois Ponts 70A**
**B-1160 Bruxelles(BE)**
Inventeur: **Gandin, Ezio**
**Rue des Ploppes 19**
**B-4040 Esneux(BE)**

(74) Mandataire: **Nichels, William et al**
**Solvay & Cie Département de la Propriété Industrielle Rue de Ransbeek, 310**
**B-1120 Bruxelles(BE)**

## (54) Compositions stabilisées de polyacétals et procédé pour leur fabrication.

(57) L'invention concerne une composition stabilisée de polyacétals comprenant un anti-oxydant phénolique, un copolymère d'éthylène et d'alcool vinylique et un amide aliphatique.

L'invention concerne également un procédé de fabrication de cette composition.

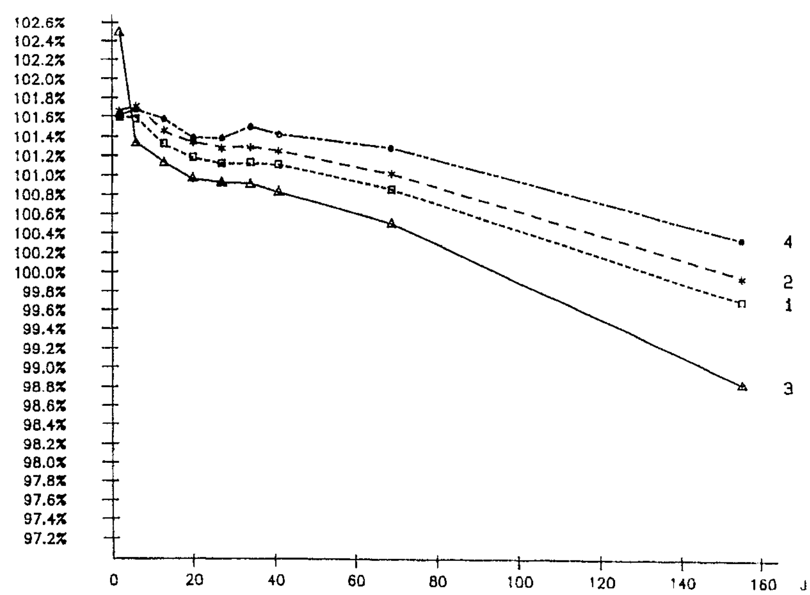


EP 0 421 973 A1

Xerox Copy Centre

## COMPOSITIONS STABILISÉES DE POLYACÉTALS ET PROCÉDÉ POUR LEUR FABRICATION

La présente invention concerne des compositions stabilisées de polyacétals comprenant au moins un anti-oxydant phénolique, un copolymère d'alcool vinylique et d'éthylène et un amide aliphatique. L'invention concerne également un procédé pour leur fabrication et leur utilisation.

Des polyoxyméthylènes ou polyacétals comprenant des enchaînements de motifs récurrents - $CH_2O$ - sont connus depuis de nombreuses années. On peut les fabriquer notamment par polymérisation du formaldéhyde anhydre ou de son trimère cyclique, le trioxane.

Ces polymères présentent de très bonnes propriétés mécaniques, un large domaine de températures d'utilisation, une bonne résistance aux agents chimiques qui en font un matériau de choix pour la confection d'objets moulés trouvant des débouchés dans les domaines de la mécanique de précision, de l'industrie automobile, de l'industrie électrique et de l'équipement électro-ménager. Toutefois, ces polymères sont caractérisés par une instabilité à l'hydrolyse, qui entraîne une dégradation avec dégagement de formaldéhyde, lorsqu'ils sont exposés de manière prolongée à des températures élevées dans des conditions normales d'utilisation.

On a déjà tenté de pallier cet inconvénient avec plus ou moins de succès en incorporant aux polymères divers stabilisants tels qu'un phénol encombré comme anti-oxydant (demande de brevet allemand DE 2 203 836), des polymères ou des oligomères contenant des groupes hydroxyles (demande de brevet européen EP 0 242 176), des amides primaire, secondaire ou tertiaire d'acides carboxyliques oléfiniques non saturés (brevet belge 630795).

La présente invention permet d'améliorer encore nettement la stabilité globale des homopolymères et des copolymères d'oxyméthyléne par l'amélioration de la stabilité à l'hydrolyse, ce qui engendre une amélioration des propriétés mécaniques. En outre, on a pu constater de façon curieuse que les compositions de l'invention présentent un poids moléculaire final particulièrement élevé et nettement supérieur à celui que possèdent des compositions constituées d'homo- ou copolymères stabilisés avec les stabilisants de l'art antérieur.

A cet effet, la présente invention concerne une composition de polyacétals comprenant au moins un anti-oxydant phénolique, un copolymère d'alcool vinylique et d'éthylène et un amide aliphatique.

Par polyacétal, on entend des homopolymères, des copolymères ou un mélange de ceux-ci, comprenant principalement des enchaînements d'unités récurrentes oxyméthyléniques et/ou également des unités récurrentes oxyalkyléniques. Par unités récurrentes oxyalkyléniques, on entend désigner les groupes oxyalkyléniques contenant au moins deux atomes de carbone adjacents. Ces groupes oxyalkyléniques peuvent contenir des substituants, tels que des groupes alkyles eux-mêmes éventuellement substitués, par exemple par des halogènes. Des substituants typiques sont par exemple les groupes méthyle, éthyle et chlorométhyle. A titre d'exemples d'unités récurrentes oxyalkyléniques préférées, on peut citer le groupe oxyéthylénique ($-OCH_2-CH_2-$) et le groupe 2-chlorométhyloxyéthylénique

$$(-OCH_2-\underset{\substack{|\\ CH_2Cl}}{CH}-).$$

En général, la proportion d'unités récurrentes oxyalkyléniques présentes dans les copolymères est comprise entre 0,05 et 20 % molaires, de préférence entre 0,1 et 10 % molaires et de manière particulièrement préférée entre 1 et 4 % molaires. Ces unités récurrentes oxyalkyléniques sont de préférence de même nature, mais la présence, dans les copolymères, d'unités oxyalkyléniques de natures différentes, n'est pas exclue.

Les polyacétals de la composition selon l'invention sont obtenus de manière connue.

Par anti-oxydant phénolique, on entend habituellement un phénol à empêchement stérique. Généralement, la composition selon l'invention comprend au moins un phénol choisi parmi le 2,2'-méthylènebis(4-méthyl-6-t-butyl-phénol), le bis(3,5-di-t-butyl-4-hydroxyhydrocinnamate) d'hexaméthylène-glycol, le tétrakis-(3,5-di-t-butyl-4-hydroxyhydrocinnamate de méthylène)méthane, le bis-3-(3-t-butyl-4-hydroxy-5-méthylphényl)propionate de triéthylène-glycol, le pentaérythrityltétrakis-(3,5-di-t-butyl-4-hydroxyhydrocinnamate), le triéthylèneglycol-bis-(3-méthyl-4-hydroxy-5-t-butylhydrocinnamate), le 1,3,5-triméthyl-2,4,6-tris(3,5-di-t-butyl-4-hydroxybenzyl)benzène, le 3-(4'-hydroxy-3',5'-di-t-butylphényl)propionate de n-octadécyle, le 4,4'-méthylènebis(2,6-di-t-butylphénol), l'octadécyl-3',5'-di-t-butyl-4'-hydroxyhydrocinnamate, le 4,4'-

méthylènebis(2,6-di-t-butylphénol), le 4,4'-butylidène-bis(6-t-butyl-3-méthylphénol), le bis[3-(3,5-di-t-butyl-4-hydroxyphényl)]propionate de 2,2'-thio-diéthyle, le 3,5-di-t-butyl-4-hydroxybenzylphosphonate de distéaryle et l'acrylate de 2-t-butyl-6-(3-t-butyl-5-méthyl-2-hydroxybenzyl)-4-méthylphényle.

De manière préférée, la composition selon l'invention comprend, comme anti-oxydant phénolique, le bis(3,5-di-t-butyl-4-hydroxyhydrocinnamate) d'hexaméthylène-glycol, également nommé 1,6-n-hexanediolbis-3-3',5'-di-t-butyl-4'-hydroxyhydrocinnamate ou l'hexaméthylène-bis-3(3',5'-di-tert.butyl-4'-hydroxyphényl)propionate et connu sous la marque IRGANOX 259 (société CIBA-GEIGY).

La composition selon l'invention comprend généralement entre 0,001 et 3 % en poids d'anti-oxydant phénolique, habituellement entre 0,005 et 2 % en poids et de manière préférée entre 0,01 et 1 %.

Par copolymère d'alcool vinylique et d'éthylène, on entend les produits de formule générale

$$\left[ (CH_2-CH_2)_x-(CH_2-\underset{\displaystyle OH}{\underset{|}{CH}})_y \right]_n$$

dans laquelle x, y et n représentent des nombres entiers.

Généralement, la composition selon l'invention comprend un copolymère statistique d'éthylène et d'alcool vinylique dont la teneur en éthylène est inférieure à 50 % molaires et qui est obtenu par hydrolyse de copolymères d'éthylène et d'acétate de vinyle riches en acétate de vinyle, le copolymère obtenu contenant moins de 3 % de résidu ester. Habituellement, la composition selon l'invention comprend un copolymère d'éthylène et d'alcool vinylique contenant moins de 2 % d'homopolymères et moins de 2 % de résidu ester. De préférence, la composition comprend un copolymère d'éthylène et d'alcool vinylique dont la teneur en éthylène est comprise entre 25 et 45 % molaires. De manière particulièrement préférée, la composition comprend un copolymère d'éthylène et d'alcool vinylique dont la teneur en éthylène est comprise entre 25 et 37 % molaires. De bons résultats ont été obtenus avec une composition comprenant un copolymère vendu sous la marque CLARENE (société SOLVAY) et en particulier les qualités denommées L, P et R, tout particulièrement avec la qualité L.

La composition selon l'invention comprend généralement entre 0,001 et 3 % en poids de copolymère d'éthylène et d'alcool vinylique, habituellement entre 0,005 et 2 % et de manière préférée entre 0,01 et 1 % en poids.

Par amide aliphatique, on entend un amide primaire, secondaire ou tertiaire. Généralement, la composition selon l'invention comprend un amide aliphatique primaire, habituellement un amide aliphatique primaire insaturé dérivé d'un acide gras. De manière préférée, la composition comprend un amide choisi parmi le N,N'-éthylène bisstéaramide, le N,N'-éthylène bisoléamide, le stéaryl stéaramide, le stéaramide, l'érucamide, l'oléamide, le linolamide, l'amide linoléique, le N-palmitylloléamide, le N-stéaryl-oléamide, le N,N'-méthylène-bis-érucamide, le N,N'-diéthyl-oléamide, le N,N'-méthylène-bis-oléamide.

De manière particulièrement préférée, l'amide présente dans les compositions selon l'invention est l'érucamide.

La composition selon l'invention comprend généralement entre 0,001 et 3 % en poids d'amide aliphatique, habituellement entre 0,005 et 2 % et de manière préférée entre 0,01 et 1 % en poids.

La composition selon l'invention peut éventuellement comprendre d'autres additifs, habituellement mis en oeuvre pour la fabrication de résines industrielles, tels que des pigments, des colorants, des agents de formulation, des anti-acides, des stabilisants UV, des modificateurs d'impact, des agents de glissance et/ou des fibres de verre. Ces additifs sont ajoutés suivant l'application envisagée de la composition.

La composition selon l'invention et les polyacétals qu'elle comprend, peuvent être préparés de diverses manières connues.

Des procédés ayant donné les meilleurs résultats consistent à mélanger le polyacétal, l'anti-oxydant phénolique, le copolymère d'alcool vinylique et d'éthylène et l'amide aliphatique ou à ajouter l'anti-oxydant phénolique lors de la fabrication du polyacétal puis à mélanger le polyacétal contenant l'anti-oxydant phénolique avec le copolymère d'alcool vinylique et d'éthylène et l'amide aliphatique. Habituellement, ces mélanges sont réalisés en phase fondue et de préférence à une température comprise entre 140 et 250 °C. Ces mélanges peuvent être avantageusement réalisés dans une extrudeuse.

La présente invention est illustrée par les exemples suivants.

Exemples 1R à 3R (comparatifs) et 4 (selon l'invention)

A partir de polyoxyméthylène en poudre à 2,5 % en poids d'oxyde d'éthylène et de poids moléculaire en nombre de 80.000, contenant 0,5 % en poids de la composition de 1,6-n-hexanediol-bis-3-3′,5′-di-t-butyl-4′-hydroxyhydrocinnamate, connu sous la marque IRGANOX 259 (Société CIBA-GEIGY), on réalise les compositions suivantes :

- pour l'exemple 1R : aucun autre additif,
- pour l'exemple 2R : 0,5 % en poids de copolymère d'éthylène et d'alcool vinylique à basse teneur en éthylène (21 % poids ou 29 % molaires), de poids moléculaire 3300, ayant un taux d'hydrolyse de 99,6 % et dont le résidu ester est inferieur à 2 % (vendu sous la marque CLARENE L par la Société SOLVAY),
- pour l'exemple 3R : 0,5 % en poids d'érucamide,
- pour l'exemple 4 : 0,4 % en poids de copolymère d'éthylène et d'alcool vinylique à basse teneur en éthylène (21 % poids ou 29 % molaires), de poids moléculaire 3300, ayant un taux d'hydrolyse de 99,6 % et dont le résidu ester est inférieur à 2 %, (vendu sous la marque CLARENE L par la Société SOLVAY), et 0,1 % en poids d'érucamide.

On homogénise ces mélanges en plaçant 25 kg de la composition ainsi obtenue dans un tonneau de 100 l de volume, celui-ci est mis en rotation, suivant un axe qui intercepte son propre axe, pendant 15 minutes à température ambiante et à une vitesse de rotation de 30 tours par minute.

Puis, la composition ainsi obtenue est mélangée en phase fondue dans une extrudeuse : c'est-à-dire, on alimente une extrudeuse double vis avec cette composition à 25 kg/h, les vis de l'extrudeuse tournant à 150 tours par minute. La fusion de la composition est réalisée sur deux éléments de l'extrudeuse placés respectivement aux températures de 190 °C et 210 °C, ces éléments ont une longueur de 160 mm; puis le mélange en phase fondue est effectué sur trois éléments à 170 °C constitués de vis équipées d'éléments de transport à grand pas.

Ensuite, la montée en pression de la composition pour son passage dans une filière de 4 trous de 4 mm de diamètre est effectuée sur deux éléments de l'extrudeuse respectivement à 170 °C et 200 °C, ces éléments sont constitués de vis équipées d'éléments de transport à petit pas.

A la sortie de la filière, les quatre joncs de matière sont refroidis par un passage dans un bain d'eau à température ambiante et parcourent 1 m dans ce bain d'eau à une vitesse de 12 m/mn. Ils sont ensuite coupés par un granulateur de joncs, on obtient des granules cylindriques de 3 mm de diamètre et 5 mm de long.

Les granules sont utilisés pour mouler par injection des disques de 2 mm d'épaisseur et de 53 mm de diamètre à l'aide d'une presse d'injection dont les parois du moule sont à une température de 90 °C, la composition lors de l'injection est à une température de 200 °C.

Un de ces disques est perforé d'un trou de 4 mm afin de le suspendre dans un bain d'eau bouillante, ce test permet de mettre en évidence la tenue à l'hydrolyse de la composition. Pour cela, on suit le poids du disque en fonction du temps de séjour dans le bain d'eau bouillante. Les résultats de ce test sont rassemblés sur la figure, l'abscisse représente le temps de séjour dans le bain d'eau bouillante en jours, l'ordonnée représente le poids en % du poids initial, le poids initial étant fixé à 100 %.

De ces déterminations on tire un coefficient angulaire de droite de perte de poids passant arbitrairement par les points du deuxième et du trente-quatrième jours, ce coefficient angulaire est appelé stabilité à l'hydrolyse, les résultats sont rassemblés au tableau 1.

On détermine l'indice de fluidité des compositions suivant la norme ASTM D 1238 en utilisant les granules obtenus précédemment, les résultats sont rassemblés au tableau 1.

On utilise les granules pour la fabrication de films de 100 microns d'épaisseur par moulage et compression, la température du moule est de 200 °C, la pression de 100 bars et le temps de compression de 2 mn. De ces films, on découpe à l'emporte-pièce des pastilles de 5 mm de diamètre qui sont utilisées pour l'examen thermogravimétrique. Cet examen est réalisé sur une balance thermogravimétrique sous air suivant un programme allant de la température ambiante à 230 °C à une vitesse de 50 °C/mn puis en conservant cette température de 230 °C, la détermination consiste à relever le temps nécessaire pour que la pastille perde 10 % de son poids. Les résultats sont rassemblés au tableau 1.

Tableau 1

| COMPOSITION | EXEMPLES | | | |
|---|---|---|---|---|
| | 1R | 2R | 3R | 4 |
| Indice de fluidité à 2,16 kg et 190 °C en g/10 min | 1,6 | 1,2 | 1,3 | 0,8 |
| Stabilité à l'oxydation | | | | |
| Temps pour 10% de perte de poids à 230 °C en min | 74 | 87 | 95 | 88 |
| Stabilité à l'hydrolyse en g/kg.jour | 0,15 | 0,12 | 0,49 | 0,04 |

**Revendications**

1 - Composition de polyacétals comprenant au moins un anti-oxydant phénolique, caractérisée en ce qu'elle comprend également un copolymère d'alcool vinylique et d'éthylène et un amide aliphatique.

2 - Composition selon la revendication 1, caractérisée en ce que l'amide aliphatique est l'érucamide.

3 - Composition selon la revendication 1 ou 2, caractérisée en ce que l'anti-oxydant phénolique est le 1,6-n-hexanediolbis-3-3′,5′-di-t-butyl-4′-hydroxyhydrocinnamate.

4 - Composition selon l'une des revendications 1 à 3, caractérisée en ce que le copolymère d'alcool vinylique et d'éthylène a une teneur en éthylène comprise entre 25 et 45 % molaires.

5 - Composition selon l'une des revendications 1 à 4, caractérisée en ce qu'elle comprend entre 0,001 et 3 % en poids d'anti-oxydant phénolique, entre 0,001 et 3 % en poids de copolymère d'alcool vinylique et d'éthylène et entre 0,001 et 3 % en poids d'amide aliphatique.

6 - Procédé pour la fabrication d'une composition selon l'une des revendications 1 à 5, caractérisé en ce que l'on mélange le polyacétal, l'anti-oxydant phénolique, le copolymère d'alcool vinylique et d'éthylène et l'amide aliphatique en phase fondue.

7 - Procédé pour la fabrication d'une composition selon l'une des revendications 1 à 5, caractérisé en ce que l'on ajoute l'anti-oxydant lors de la fabrication du polyacétal, puis on mélange le polyacétal contenant l'anti-oxydant phénolique avec le copolymère d'alcool vinylique et d'éthylène et l'amide aliphatique en phase fondue.

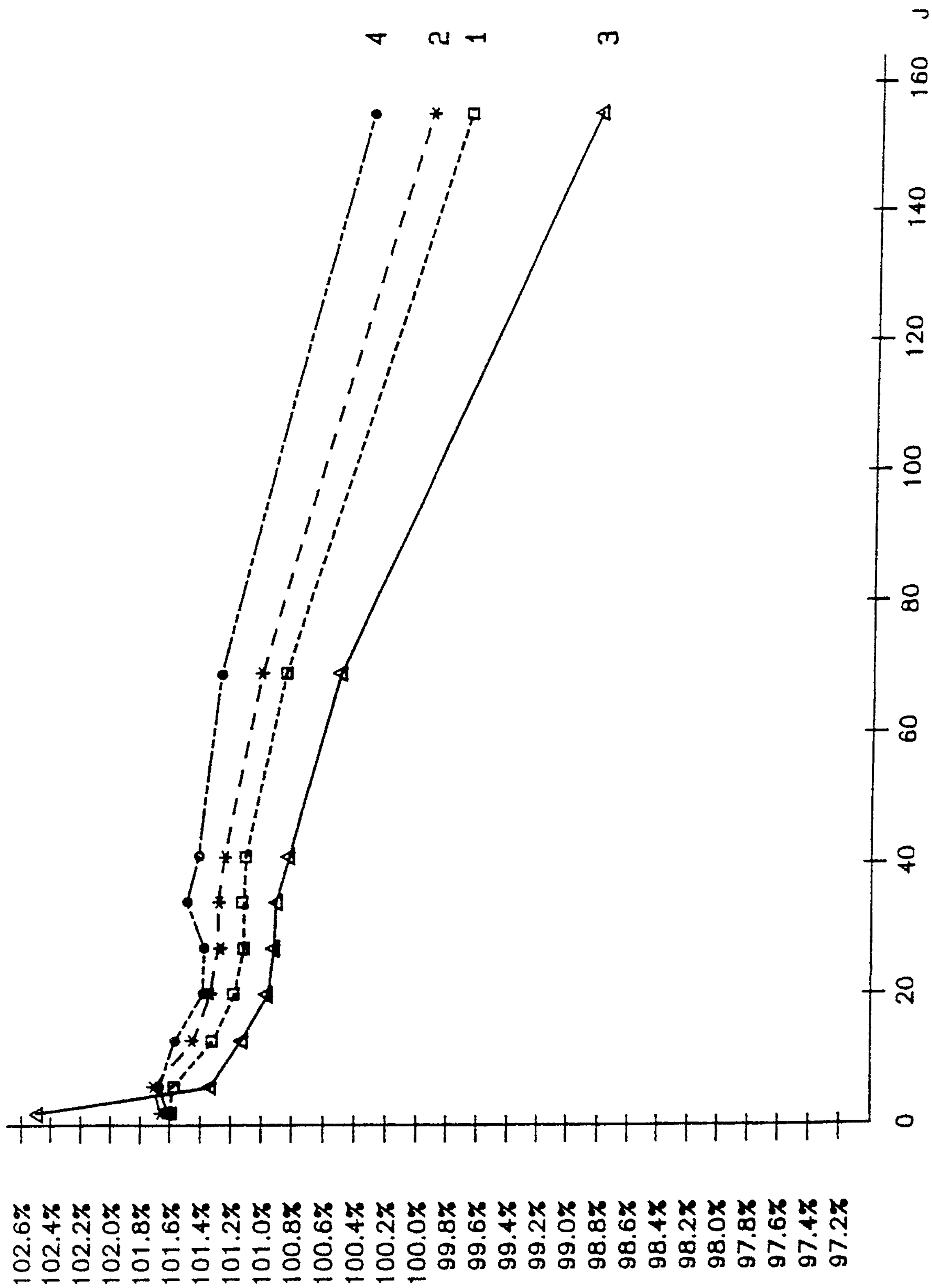
102.6%
102.4%
102.2%
102.0%
101.8%
101.6%
101.4%
101.2%
101.0%
100.8%
100.6%
100.4%
100.2%
100.0%
99.8%
99.6%
99.4%
99.2%
99.0%
98.8%
98.6%
98.4%
98.2%
98.0%
97.8%
97.6%
97.4%
97.2%
0
20
40
60
80
100
120
140
160
J
4
2
1
3

Office européen des brevets

# RAPPORT DE RECHERCHE EUROPEENNE

Numero de la demande

EP 90 87 0163

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-242176 (E.I.DU PONT DE NEMOURS AND COMPANY) *Revendications 1,10; page 12, lignes 25-35; exemple 11* | 1-2, 4-6 | C08L29/04<br>C08L59/00<br>C08K5/13<br>C08K5/20 |
| Y | DE-A-1198064 (STAMICARBON N.V) *Exemples; revendication* | 1-2, 4-6 | |
| A | FR-A-2245721 (HOECHST AKTIENGESELLSCHAFT) | | |

DOMAINES TECHNIQUES RECHERCHES (Int. Cl.5 )

C08K
C08L

Le présent rapport a été établi pour toutes les revendications

| Lieu de la recherche | Date d'achèvement de la recherche | Examinateur |
|---|---|---|
| LA HAYE | 19 NOVEMBRE 1990 | WILSON A.J.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)